# EUROPÄISCHE PATENTSCHRIFT

(11) **EP 1 736 676 B1**
(45) Veröffentlichungstag und Bekanntmachung des Hinweises auf die Patenterteilung: **21.11.2007**
(21) Anmeldenummer: 05013740.5
(22) Anmeldetag: 25.06.2005
(51) Int. Cl.: F16C 33/78

(54) **Wälzlager mit einem Dichtelement**
Rolling bearing with a sealing element
Palier à roulement avec un élément d'étanchéité

(43) Veröffentlichungstag der Anmeldung: 27.12.2006
(73) Patentinhaber: ZF FRIEDRICHSHAFEN AG, 88046 Friedrichshafen (DE)
(72) Erfinder: Voit, Herbert, 97422 Schweinfurt (DE)

(56) Entgegenhaltungen:
- DE-U- 1 940 357
- US-A- 4 526 485
- US-A- 5 642 946

## Beschreibung

Die Erfindung betrifft ein Wälzlager mit einem Dichtelement gemäß dem Oberbegriff des Patentanspruchs 1.

Wälzlager sind allgemein hinreichend bekannt. Zum Beispiel bilden diese als Ausrücklager eine Hauptkomponente einer Ausrückvorrichtung zur Betätigung von trockenen Reibungskupplungen in Kraftfahrzeugen. Die Einsatzbedingungen eines derartigen Ausrücklagers im Antriebsstrang von Kraftfahrzeugen erfordern zur Erzielung einer möglichst langen Lagerlebensdauer eine sorgfältige Abdichtung des Lagerinnenraumes, in dem die Wälzkörper mit den Laufbahnen des Lagers im kraftübertragenden Wälzkontakt stehen. Dafür sind allgemein Dichtungselemente vorgesehen, wodurch ein Schmierstoffaustritt aus einem Lager und ein Schmutzeintritt in ein Lager auf ein Minimum reduziert werden sollen.

Als besonders anspruchsvoll erweisen sich Wälzlagerdichtungen in Kraftfahrzeugen, welche außerordentlich großen Staub- und Schmutzmengen ausgesetzt sind, wie dieses beispielsweise im Bergbau der Fall ist. Die Fremdpartikel, die z.B. in der Umgebungsluft enthaltene Schwebstoffe darstellen, gelangen leicht in die Getriebeglocke, werden dort mit der zirkulierenden Luft unmittelbar an das Kupplungsausrücksystem transportiert und lagern sich gemeinsam mit dem ohnehin vorhandenen Kupplungsabrieb bevorzugt an den Dichtelementen des Ausrücklagers ab. Über die prinzipbedingte schwellende Axialbelastung eines Ausrücklagers und durch die verschleißfördemde Aggressivität der Schwebstoffe bzw. Stäube kommt es allmählich zu einer Minderung der Wirksamkeit und schließlich zu einem frühen Versagen der Dichtsysteme, was letztendlich zum Ausfall des Ausrücklagers und damit der gesamten Reibungskupplung führen kann.

Ein Wälzlager mit einem Dichtelement wird in der DE 197 09 056 A1 offenbart, wobei das Dichtelement mit einem Bord fest mit dem Außenring des dort dargestellten Wälzlagers verbunden ist und mittels zwei umgekehrt V-förmig gespreizten Dichtlippen mit dem Innenring in einer Dichtverbindung steht. Die am Lager innen angeordnete Dichtlippe ist Bestandteil einer Berührungsdichtung und befindet sich dabei im Schleifkontakt mit einer konischen Dichtfläche, während die am Lager nach außen gerichtete Dichtlippe mit einer zu der erstgenannten Fläche angrenzenden Zylinder fläche einen Dichtspalt für eine Labyrinthdichtung ausbildet.

Ein weiteres Wälzlager, dessen Dichtelement ebenfalls zwei Dichtlippen in Form einer Kontaktdichtlippe und einer Labyrinthdichtlippe aufweist und mit diesen an einem Ring eines Wälzlagers eine äußere Labyrinthdichtung und eine innere Berührungsdichtung ausbildet, wird in der DE 600 03 477 T2 offenbart. Im Unterschied zu dem vorgenannten Dichtelement wirken beide, dem Wälzlagerring zugeordnete Dichtlippen mit einer gemeinsamen, an diesem ausgeführten Zylinderfläche zusammen. Die Kontaktdichtlippe weist gegenüber dem Lagerinnenring einen geringfügig kleineren Durchmesser auf, während die Labyrinthdichtlippe mit einem geringfügig größeren Durchmesser als der Lagerinnenring gefertigt ist. Bei der Montage des Dichtelementes wird die Kontaktdichtlippe über einen elastischen Auslegerarmabschnitt am Grundkörper angeordnete Kontaktdichtlippe verschwenkt und kann sich vorgespannt an der Dichtfläche des Lagerringes anlegen.

Die erläuterten Dichtelemente mit einer nach außen gerichteten Labyrinthdichtung und einer nach innen gerichteten Kontaktdichtung bieten einen nur bedingten Schutz eines Wälzlagers, da während der Nutzung insbesondere kleine Partikel (Stäube) in der Lage sind, die erstgenannte Dichtung zu überwinden und sich dann unmittelbar an der Kontaktdichtlippe zu akkumulieren. Durch Vibrationen werden die Partikelanhäufungen weiter verdichtet und können schließlich die Kontaktdichtlippe abrasiv zerstören und somit letztlich in das Lagerinnere eindringen, wodurch dessen Verschleiß erheblich gefördert wird und dessen Ausfall absehbar ist.

Das US-Patent 4,526,485 offenbart ein Wälzlager gemäß dem Oberbegriff des Patentanspruchs 1 mit einem Dichtelement, welches in einem kreisringförmigen Einbauraum zwischen einem ersten, radial äußeren und einem zweiten, radial inneren Lagerring an dem dort beschriebenen zweireihigen Schrägkugellager angeordnet ist. Das Dichtelement ist dabei mit einem Fixierabschnitt an dem äußeren Lagerring festgelegt und steht mit zwei V-förmig aufgespreizten Dichtlippen schleifend mit einem Abschnitt des axial geteilten Lagerinnenringes in einer Dichtverbindung, wobei diese Dichtlippen axial beabstandet am Wälzlager angeordnet sind und dort eine äußere und eine innere Dichtlippe bilden.

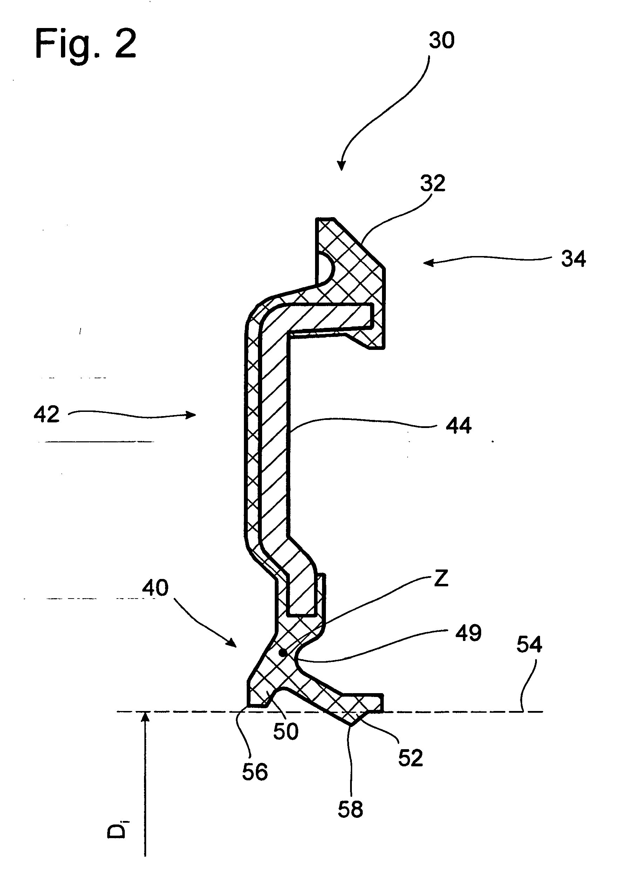

Wie in der dort dargestellten Fig. 2 erkennbar, weist die äußere Dichtlippe im unmontierten Zustand der Dichtung einen kleineren Durchmesser als die innere Dichtlippe auf. Wenn bei der Montage des Wälzlagers die Dichtung bereits mit deren Fixierabschnitt an dem äußeren Lagerring festgelegt ist, so gelangt beim axialen Einsetzen eines der Lagerinnenringabschnitte von axial äußerer Richtung kommend zunächst die äußere und dann die innere Dichtlippe mit diesem in Anlagekontakt. Die Erfindung stellt sich die Aufgabe, ein Wälzlager mit einem Dichtelement bereitzustellen, welches kompakt gestaltet sowie einfach und sicher an einem Wälzlager montierbar ist.

Die Erfindung löst das gestellte Problem mit einem gattungsgemäßen Wälzlager, das zusätzlich das im Kennzeichen des Patentanspruchs 1 aufgeführte Merkmal aufweist.

Es wird somit ein Wälzlager mit einem Dichtelement vorgeschlagen, wobei das Dichtelement in einen kreisringförmigen Einbauraum zwischen einem ersten und einem zweiten Lagerring an dem Wälzlager angeordnet und dabei zunächst mit einem Fixierabschnitt an dem ersten Lagerring festgelegt ist. Das Dichtelement steht mit zwei Dichtlippen eines Lippenabschnitts schleifend mit dem zweiten Lagerring in einer Dichtverbindung, wobei die Dichtlippen axial beabstandet am Wälzlager angeordnet sind und dort eine äußere und eine innere Dichtlippe bilden. Das Wälzlager ist dadurch gekennzeichnet, dass im unmontierten Zustand des Dichtelementes die innere Dichtlippe einen kleineren und die äußere Dichtlippe einen größeren Durchmesser aufweist als die Dichtfläche des zweiten Lagerrings.

Die Montage des Dichtelementes an dem zweiten Lagerring erfolgt durch eine axiale Relativbewegung zu diesem, wobei die äußere Dichtlippe zunächst radial beabstandet zu deren Dichtfläche geführt wird und wobei durch eine radiale Auslenkung der inneren Dichtlippe infolge eines Kontaktes mit dem zweiten Lagerring die äußere Dichtlippe ebenfalls verschwenkt wird und in Anlage zu deren Dichtfläche gebracht wird. Das heißt, dass die Verschwenkbewegung zur endgültigen Positionierung der Dichtlippen durch die Berührung einer Bauteilkante von der inneren Dichtlippe ausgelöst und gesteuert wird. Ein Umstülpen der äußeren Dichtlippe wird damit sicher vermieden.

Vorteilhafte Ausführungsformen und Weiterbildungen der Erfindung sind in den abhängigen Ansprüchen beschrieben.
Es hat sich als zweckmäßig erwiesen, die Dichtlippen von einem Fußbereich des Dichtelementes ausgehend zu dem zweiten Lagerring hin aufgespreizt zueinander anzuordnen.

Mit besonderen Vorteil weist der Fußbereich ein Verschwenkzentrum auf, um welches die Dichtlippen bei der Montage gemeinsam elastisch verschwenkt werden, um dadurch im montierten Zustand jeweils definiert vorgespannt an der jeweiligen Dichtfläche zur Anlage zu kommen.

Mit weiterem Vorteil liegen beide Dichtlippen an einer gemeinsamen Dichtfläche des zweiten Lagerrings an. Dadurch können sich zusätzliche Flächen und Bearbeitungsschritte erübrigen. Als gemeinsame und besonders einfach zu fertigende Dichtfläche bietet sich eine Zylinderfläche des zweiten Lagerringes an.

Zur Versteifung umfasst das Dichtelement einen Armierungsabschnitt mit einem Versteifungselement, bspw. einem Versteifungsring.

Eine einfache und betriebssichere Variante zur Anordnung des Fixierabschnittes an dem ersten Lagerring sieht vor, an dem Dichtelement eine Einschnapplippe auszubilden, welche in eine umlaufende Ringnut des ersten Lagerrings eingeschnappt werden kann.

Die Erfindung wird nachfolgend anhand der beiliegenden Zeichnungen beispielhaft erläutert. Es zeigen:
- Fig. 1: eine Teilschnittdarstellung eines Wälzlagers;
- Fig. 2: eine Teilschnittdarstellung eines Dichtelementes mit zwei Kontaktlippen;
- Fig. 3a-c: den Montageverlauf des Dichtelementes der Fig. 2 am Wälzlager gemäß Fig. 1 in mehreren Abschnitten.

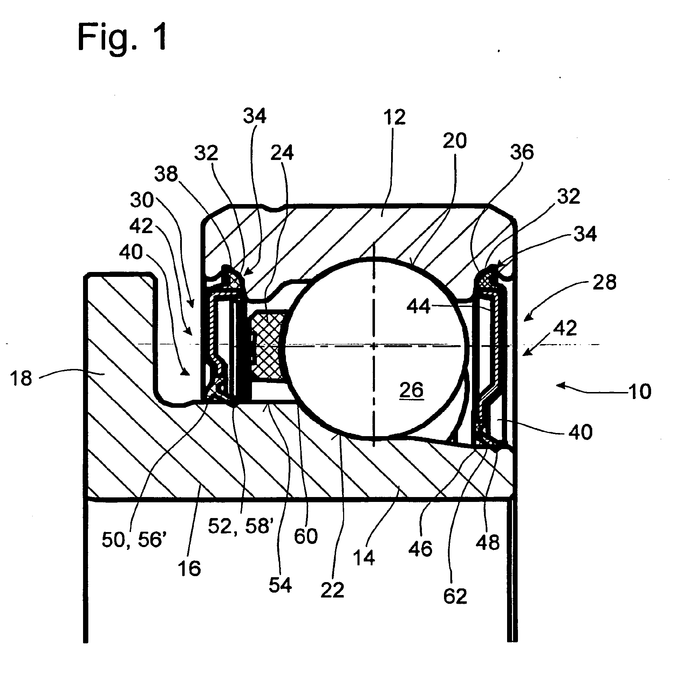

Fig. 1 zeigt einen Ausschnitt eines Ausrücklagers 10, welches Bestandteil einer Ausrückvorrichtung zum Betätigen einer Kraftfahrzeugreibungskupplung ist. Das Ausrücklager 10 ist als Schrägkugellager ausgebildet und weist einen feststehenden ersten, radial äußeren Lagerring 12 und einen umlaufenden zweiten, radial inneren Lagerring 14 auf, welcher mittels eines Axialfortsatzes 16 über das Lager 10 hinaus verlängert ist und dort über einen Flansch 18 an einem zeichnerisch nicht dargestellten Ausrückorgan der Reibungskupplung zur Übertragung einer Betätigungskraft angreifen kann.

Die Lagerringe 12, 14 weisen zueinander zugewandte Laufbahnen 20, 22 für in einem Kugelkäfig 24 geführte Kugeln 26 auf. Zum Schutz vor dem Eindringen von Schmutz und gleichfalls vor dem Austreten von einem im Lagerinneren befindlichen Schmiermittel sind in einem kreisringförmigen Einbauraum zwischen den Lagerringen 12, 14 zwei mit einem unterschiedlichen Innendurchmesser ausgeführte Berührungsdichtungen 28, 30 aus einem elastischen Material angeordnet, welche jeweils mit einer Einschnapplippe 32 eines Fixierabschnittes 34 in umlaufenden Ringnuten 36, 38 an dem äußeren Lagerring 12 festgelegt sind und mit einem radial inneren Lippenabschnitt 40 mit dem inneren, rotierbaren Lagerring 14 in einer Dichtverbindung stehen. Zwischen dem Fixierabschnitt 34 und dem Lippenabschnitt 40 sind jeweils Armierungsabschnitte 42 ausgebildet, wobei der elastische Grundkörper der Dichtelemente 28, 30 mit einem im Bereich des Fixierabschnittes 34 am Lager 10 nach innen abgewinkelten und im Übergangsbereich zum Lippenabschnitt 40 gekröpften metallischen Versteifungsring 44 verstärkt ist.

Fig. 2 zeigt zur Veranschaulichung das Dichtelement 30, welches bis auf die Ausbildung des Lippenabschnitts 40 den gleichen Aufbau wie das Dichtelement 28 aufweist. Das Dichtelement 28 ist in bekannter Weise als Kontaktdichtung mit einer einzigen nach außen gerichteten Dichtlippe 46 ausgeführt, welche mit einer Dichtkante 48 im Schleifkontakt am Lagerinnenring 14 anliegt und dort einen Austritt von Schmiermittel aus dem Lager und einen Eintritt von Schmutz in das Lagerinnere weitestgehend vermeidet.

Im Gegensatz dazu umfasst der Lippenabschnitt 40 des Dichtelementes 30 einen Fußbereich 49, von dem zwei V-förmig in Richtung des inneren Lagerrings 14 aufgespreizte Dichtlippen 50, 52 ausgehen, welche sich mit an diesen vorgesehenen Dichtkanten 56, 58 im montieren Zustand beide mit dem Innenring 14 in einem schleifenden Anlagekontakt befinden. Dabei fungiert die bezüglich des Wälzlagers 10 axial äußere Dichtlippe 50 als Staublippe und die innere Dichtlippe 52 vorrangig als Fettlippe.

Wie aus Fig. 2 ersichtlich ist, weist im unmontierten Zustand des Dichtelementes die innere Dichtlippe 52 einen kleineren und die äußere Dichtlippe 50 einen größeren Durchmesser auf als die dort mit einer Strichlinie angedeutete Dichtfläche 54 des radial inneren Lagerrings 14. Die Dichtlippe 50 ist gegenüber der Dichtlippe 52 kürzer ausgebildet. Außerdem weisen die Dichtlippen 52 des Dichtelements 30 und die einzige Dichtlippe 46 des Dichtelementes 28 beide in die von dem Flansch 18 abgewandte Richtung.

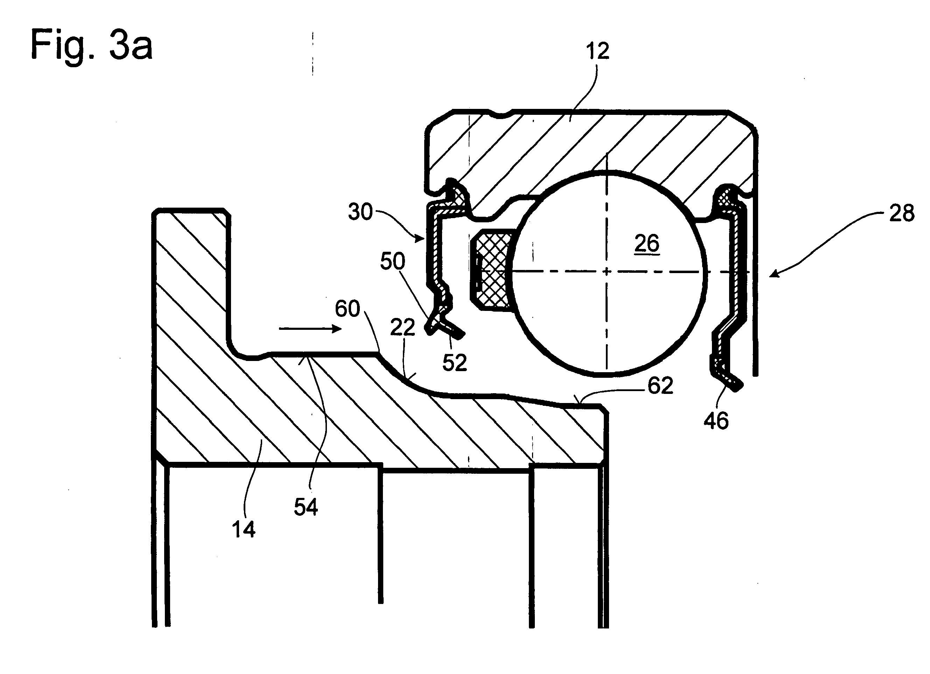

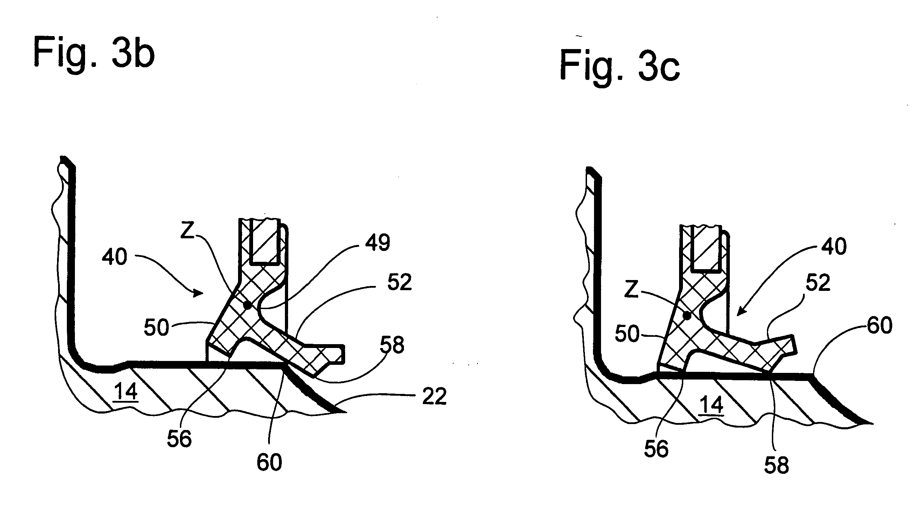

Bei der Montage des Wälzlagers 10 werden zunächst die beiden Dichtelemente 28, 30 jeweils mit deren Einschnapplippe 32 in die Nuten 36, 38 am Außenring 12 eingeschnappt und der Kugelkäfig 24 mit den Kugeln 26 an diesem positioniert (Fig. 3a). Dann wird zu dieser vormontierten Einheit durch eine axiale Relativbewegung der Lagerinnenring 14 zugeführt, wobei die äußere Dichtlippe 50 des Dichtelementes 30 zunächst radial beabstandet zu deren als Zylinderfläche ausgeführten Dichtfläche 54 geführt wird, bis die innere Dichtlippe 52 die von der Laufbahn 22 und der Dichtfläche 54 gebildeten Kante 60 berührt (Fig. 3b,c) und im weiteren Verlauf nach radial außen entsprechend der Pfeilrichtung ausgelenkt wird. Der gemeinsame Fußbereich der Dichtlippen 50, 52 ist gegenüber den unmittelbar benachbarten Bereichen im Querschnitt verjüngt ausgeführt, wodurch ein Verschwenkzentrum Z zur gemeinsamen elastischen Verschwenkung der Dichtlippen 50, 52 erzeugt wird. Das hat zur Folge, dass bei der radialen Auslenkung der Dichtlippe 52 die äußere Dichtlippe 50 ebenfalls verschwenkt wird und ebenfalls in Anlage zur Dichtfläche 54 gebracht wird. Im noch weiteren Montageverlauf gelangt schließlich auch die Dichtlippe 46 des Dichtelements 28 mit deren Dichtkante 48 in den gewünschten Anlagekontakt mit einer am axialen Ende des Lagerinnenrings 14 ausgeführten Dichtfläche 62.

Selbstverständlich kann das Wälzlager 10 auch so ausgeführt werden, dass die Dichtelemente 28, 30 mit deren Fixierabschnitten 34 am Lagerinnenring 14 und die Dichtlippen 46 bzw. 50, 52 am Lageraußenring 12 dichtend anliegen. Des Weiteren müssen die Dichtlippen 50, 52 nicht ein und dieselbe Dichtfläche am Wälzlager 10 aufweisen, sondern können auch an unterschiedlichen Flächen zur Anlage kommen.

### Bezugszeichenliste

- 10: Wälzlager, Ausrücklager
- 12: äußerer Lagerring
- 14: innerer Lagerring
- 16: Fortsatz
- 18: Radialflansch
- 20,22: Laufbahn
- 24: Kugelkäfig
- 26: Kugeln
- 28, 30: Dichtelemente
- 32: Einschnapplippe
- 34: Fixierabschnitt
- 36, 38: Ringnut
- 40: Lippenabschnitt
- 42: Armierungsabschnitt
- 44: Versteifungsring
- 46: Dichtlippe
- 48: Dichtkante
- 49: Fußbereich
- 50: äußere Dichtlippe
- 52: innere Dichtlippe
- 54: Dichtfläche am Lagerinnenring
- 56,58: Dichtkante
- 60: Kante
- 62: Dichtfläche
- Di: Durchmesser des Lagerinnenrings
- Z: Verschwenkzentrum

## Patentansprüche

1. Wälzlager (10) mit einem Dichtelement (30), welches in einem kreisringförmigen Einbauraum zwischen einem ersten und einem zweiten Lagerring (12, 14) an dem Wälzlager (10) angeordnet und dabei mit einem Fixierabschnitt (34) an dem ersten Lagerring (12) festgelegt ist und wobei das Dichtelement (30) mit zwei Dichtlippen (50, 52) eines Lippenabschnitts (36) schleifend mit dem zweiten Lagerring (14) in einer Dichtverbindung steht und wobei die Dichtlippen (50, 52) axial beabstandet am Wälzlager (10) angeordnet sind und dort eine äußere (50) und eine innere Dichtlippe (52) bilden
**dadurch gekennzeichnet,**
**dass** im unmontierten Zustand des Dichtelementes (30) die innere Dichtlippe (52) einen kleineren und die äußere Dichtlippe (50) einen größeren Durchmesser aufweist als die Dichtfläche (54) des zweiten Lagerrings (14).

2. Wälzlager nach Anspruch 1,
**dadurch gekennzeichnet,**
**dass** die Dichtlippen (50, 52) von einem Fußbereich (49) ausgehend zu dem zweiten Lagerring (14) aufgespreizt zueinander angeordnet sind.

3. Wälzlager nach Anspruch 2,
**dadurch gekennzeichnet,**
**dass** der Fußbereich (49) ein Verschwenkzentrum (Z) zur gemeinsamen elastischen Verschwenkung der Dichtlippen (50, 52) bei der Montage aufweist.

4. Wälzlager nach einem der Ansprüche 1 - 3,
**dadurch gekennzeichnet,**
**dass** beide Dichtlippen (50, 52) an einer gemeinsamen Dichtfläche (54) des zweiten Lagerringes (14) anliegen.

5. Wälzlager nach einem der Ansprüche 1-4,
**dadurch gekennzeichnet,**
**dass** die Dichtfläche (54) als Zylinderfläche ausgebildet ist.

6. Wälzlager nach einem der Ansprüche 1 - 5,
**dadurch gekennzeichnet,**
**dass** das Dichtelement (30) einen Armierungsabschnitt (42) mit einem Versteifungselement (44) aufweist.

7. Wälzlager nach einem der Ansprüche 1 - 6,
**dadurch gekennzeichnet,**
**dass** der Fixierabschnitt (34) eine Einschnapplippe (32) zur Anordnung in einer umlaufenden Ringnut (38) des ersten Lagerrings (12) aufweist.

## Claims

1. Roller bearing (10) comprising a sealing element (30), which latter is disposed in an annular installation space between a first and a second bearing ring (12, 14) on the roller bearing (10) and is secured by a fixing portion (34) to the first bearing ring (12), and wherein the sealing element (30) is sealingly connected by two sealing lips (50, 52) of a lip portion (36) to the second bearing ring (14) in mutually rubbing contact, and wherein the sealing lips (50, 52) are disposed on the roller bearing (10) at an axial distance apart and form there an outer (50) and an inner sealing lip (52), **characterized in that**, in the uninstalled state of the sealing element (30), the inner sealing lip (52) has a lesser and the outer sealing lip (50) has a greater diameter than the sealing face (54) of the second bearing ring (14).

2. Roller bearing according to Claim 1, **characterized in that** the sealing lips (50, 52) are arranged such that, radiating from a foot region (49), they are splayed out towards the second bearing ring (14).

3. Roller bearing according to Claim 2, **characterized in that** the foot region (49) has a pivot centre (Z) for the joint elastic pivoting of the sealing lips (50, 52) during the assembly.

4. Roller bearing according to one of Claims 1-3, **characterized in that** both sealing lips (50, 52) bear against a joint sealing face (54) of the second bearing ring (14).

5. Roller bearing according to one of Claims 1-4, **characterized in that** the sealing face (54) is configured as a cylindrical surface.

6. Roller bearing according to one of Claims 1-5, **characterized in that** the sealing element (30) has a reinforcing portion (42) comprising a stiffening element (44).

7. Roller bearing according to one of Claims 1-6, **characterized in that** the fixing portion (34) has a snap-in lip (32) for arrangement in a circumferential ring groove (38) of the first bearing ring (12).

## Revendications

1. Palier à roulement (10) avec un élément d'étanchéité (30) qui est disposé sur le palier à roulement (10) dans un espace d'installation en forme d'anneau de cercle entre une première et une deuxième bagues de roulement (12, 14), en étant fixé en position par une partie d'immobilisation (34) sur la première bague de roulement (12), sachant que l'élément d'étanchéité (30) se trouve en liaison d'étanchement par frottement avec la deuxième bague de roulement (14) par deux lèvres d'étanchéité (50, 52) d'une partie de lèvre (36) et sachant que les lèvres d'étanchéité (50, 52) sont disposées sur le palier à roulement (10) en étant axialement distantes et y constituent une lèvre d'étanchéité extérieure (50) et une lèvre d'étanchéité intérieure (52),
**caractérisé en ce que**, dans l'état non monté de l'élément d'étanchéité (30), la lèvre d'étanchéité intérieure (52) présente un plus petit diamètre et la lèvre d'étanchéité extérieure (50) un plus grand diamètre que la surface d'étanchéité (54) de la deuxième bague de roulement (14).

2. Palier à roulement selon la revendication 1, **caractérisé en ce que** les lèvres d'étanchéité (50, 52) sont disposées en s'écartant l'une de l'autre, à partir d'une région de base (49), en direction de la deuxième bague de roulement (14).

3. Palier à roulement selon la revendication 2, **caractérisé en ce que** la région de base (49) présente un centre de pivotement (Z) pour le pivotement élastique conjoint des lèvres d'étanchéité (50, 52) lors du montage.

4. Palier à roulement selon l'une quelconque des revendications 1 à 3, **caractérisé en ce que** les lèvres d'étanchéité (50, 52) s'appliquent toutes deux contre une surface d'étanchéité commune (54) de la deuxième bague de roulement (14).

5. Palier à roulement selon l'une quelconque des revendications 1 à 4, **caractérisé en ce que** la surface d'étanchéité (54) est réalisée sous forme de surface cylindrique.

6. Palier à roulement selon l'une quelconque des revendications 1 à 5, **caractérisé en ce que** l'élément d'étanchéité (30) présente une partie d'armature (42) avec un élément de renforcement (44).

7. Palier à roulement selon l'une quelconque des revendications 1 à 6, **caractérisé en ce que** la partie d'immobilisation (34) présente une lèvre d'enclenchement (32) à disposer dans une rainure annulaire entourante (38) de la première bague de roulement (12).
